# EUROPEAN PATENT APPLICATION

(11) **EP 3 264 287 A1**
(43) Date of publication of application: **03.01.2018**
(21) Application number: 16176995.5
(22) Date of filing: 29.06.2016
(51) Int. Cl.: G06F 17/30

(54) **DATABASE EXTENSIBILITY**

(71) Applicant: Fleetcor Europe Limited, London SW1P 2NU (GB)
(72) Inventor: HYDE, James, North Yorkshire, HG5 8QB (GB); BENNETT, Jonathan, North Yorkshire, HG5 8QB (GB); LLOYD, Kevin, North Yorkshire, HG5 8QB (GB)
(74) Representative: Carpmaels & Ransford LLP

(57) **Abstract**

A method for handling access to a database service hosted by a database server is provided. A database access device is in communication with the database server, the database server supporting both conventional access queries and extended access queries. One or more database access queries is received from an external source at the database access device; and based on a received query, the database access device provides an extended service response in response to the external source.

## Description

### Field of Disclosure

The present disclosure relates to the provision of a database service, in particular the provision of database service which provides extended capabilities.

### Background

Database services traditionally support the sharing of data across multiple sites ("sharing in space") in a one-to-one or one-to-multiple sharing arrangement whereby data is replicated from one master database server to another individual database server or multiple individual database servers. Data changes in one database ripple across to the other databases in the system shortly after the changes have occurred. The configuration of the databases in a particular shared database system must be broadly similar such that the same data can be shared accurately between two databases. This means that the same database schema has to be utilised for all of the databases. In the shared system.

This causes problems for database systems which require local database servers to have extended capability since individual database servers must conform to the database service of the overall system whilst also providing custom services which are individual to the particular database server. This can lead to compatibility problems for processing extended database queries which may or may not be supported by different individual databases. This problem is compounded when different organisations control the various database servers, such that, for example, the organisation controlling the database service at one level may not have direct control over the individual site databases which could each be individually controlled by different organisations.

It is desirable to reduce the database compatibility issues that arise as a result of the above problems, in particular when desiring to provide extended capability for individual databases.

### Summary of the Disclosure

The invention of the present disclosure aims to solve the aforementioned problems and is defined in the appendant claims. The invention is also summarised below according to various embodiments.

In a first aspect of the present disclosure, there is provided a method for handling access to a database service hosted by a database server, comprising:
(i) providing a database access device in communication with the database server, the database server supporting both conventional access queries and extended access queries;
(ii) receiving one or more database access queries from an external source at the database access device; and
(iii) based on a received query, the database access device providing an extended service response in response to the external source.

The database service may be a shared database service of a database system. There may be a plurality of database servers within the database system, each with an associated database access device. Each database server may have its own uniquely associated database access device. There may be two or more database servers of the plurality of database servers, for example a first and a second database server, and the first database server may have an associated database access device. There may be two client access devices both of which can communicate with the database access device and send queries thereto, and both of which can communicate directly with the second database server. The first client access device may be configured to send a conventional access query receivable by the database access device and the second database server. The first client access device may be further configured to generate and send one or more extended access queries and send it to the database access device. The second client access device may also be configured to send a conventional access query receivable by the database access device and the second database server. The second client access device may also be configured to send a further access query which is not conventional and which cannot be processed by the first database server. Such a first access query can be received by the database access device which then determines that it can neither be processed by the first database server nor reformatted to be processed by the first processing; as such it is rejected by sending a rejection notification to the second client access device.

Step (iii) may comprise processing the received query by the database access device, and determining that the received query comprises an extended access query and sending the extended access query to the database server in a form which is supported by the database server for interpreting the extended access query.

The database service may comprise conventional database store procedures and extended store procedures.

Step (iii) may further comprise the database access device reformatting the extended access query into a form supported by the extended store procedure of the database service and sending the reformatted extended access query to the database server.

Step (iii) may further comprise the database server receiving the extended access query, processing it according to the extended store procedure and responding with the extended service response.

The method may further comprise step (ii-a) determining via the database access device whether the database service has the capability to respond to the extended access query.

Step (ii-a) may comprise sending an extended service capability request to the database server to query the capability of the database server provisioned by the database server.

The method may further comprise step (ii-b) receiving the extended service capability request at the database server and determining whether extended capability of the database service is present.

The step of determining in step (ii-b) may comprise, if extended capability of the database is present, responding with an extended database capability indicator to the database access device.

The extended database capability indicator may be an indicator of the type of extended capability provisioned by the database server.

The method may further comprise using the extended database capability indicator to identify the form of the extended database access query supported by the database service of the database server for the database access query prior to reformatting.

The method may further comprise storing the extended database capability indicator in an extensibility register accessible to the database access device.

The method may further comprise receiving a further database access query for the database service hosted by the database server and querying the extensibility register to identify the form of the extended database access query supported by the database service of the database server for the further database access query prior to reformatting by the database access device and sending to the database server.

In a second aspect of the present disclosure, there is provided a computer readable medium comprising computer executable instructions which, when executed by a processor, cause the processor to perform the steps of the aforementioned method.

In a third aspect of the present disclosure, there is provided a computing device comprising a processor in communication with the aforementioned computer readable medium, wherein the processor is configured to execute the executable instructions to perform the method.

In a fifth aspect, there is provided a database access device comprising processing circuitry configured to:
(i) be in communication with a database server which supports both conventional access queries and extended access queries;
(ii) receive one or more database access queries from an external source at the database access device; and
(iii) based on a received query, the database access device providing an extended service response in response to the external source.

In a sixth aspect of the present disclosure, there is provided a client access device being the aforementioned external source and configured to access a database service by sending an extended access query to the aforementioned database access device and receive an extended service response therefrom.

In a seventh aspect of the present disclosure, there is provided a database access device comprising the aforementioned computing device.

In an eighth aspect of the present disclosure, there is provided a database server configured to receive an extended access query from the aforementioned database access device and provide an extended service response thereto. The database server can be provisioned to host a database as set out above. The database service may comprise a conventional database schema and data, and further comprises an extended store procedure responsive to the extended access query.

In ninth aspect of the present disclosure, there is provided a system comprising:
an external source, for example a client access device;
the aforementioned database access device; and
the database server device in communication with the database access device.

### Brief Description of Drawings

The present invention is described in exemplary embodiments below with reference to the accompanying drawings in which:
Fig. 1 is a representation of a database system according one embodiment of the present disclosure;
Fig. 2 is a representation of components forming the system of Fig. 1;
Fig. 3 is a representation of database content utilised according to the systems of Fig. 1.

### Detailed Disclosure

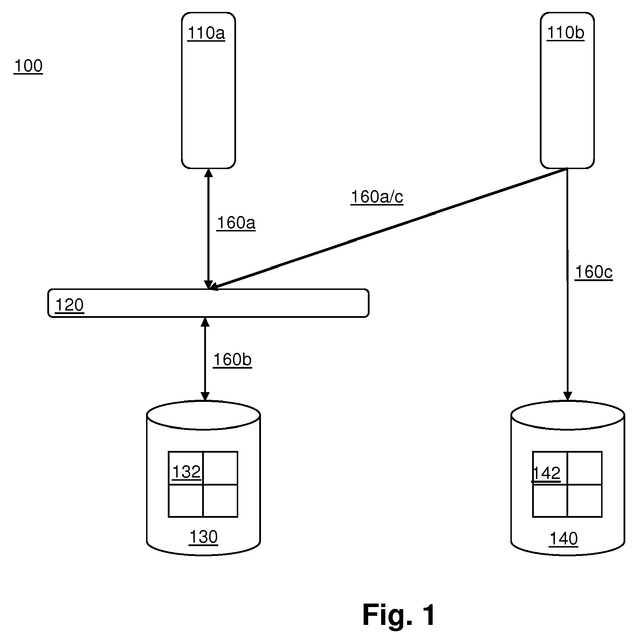

Referring to Fig. 1, a database system 100 implemented according to one embodiment of this disclosure is described. It will be appreciated that the depicted embodiment is only one example of how the invention may be implemented.

The system 100 comprises a first client access device 110a. The first client access device 110a is in communication with a database access device 120 which itself is in communication a first database server 130 providing a first database 132.

The system 100 also comprises a second client access device 110b. The second client access device 110b is in communication directly with database server 140 providing a second database 142, for which there is no associated database access device provisioned therefor. The second client access device 110b is also in communication with the database access device 120 for the first database service and thus is in communication with the first database server 130 including first database 132.

The client access devices 110a, 110b may each be a standalone data input device configured to read, write, update and configure the data in the databases 132, 142 including the data content and configuration and/or database schema. The client access device 110a, 110b may be a server or client computer under direct control of the database administrator or user and thereby be configured with user or administrator access rights for he database.

Communication between the client access device 110a, 110b, the database access device 120 and the plurality of database servers 130, 140 takes place over at least one, or more than one communication network 160a, 160b, 160c, such as one or more packet switched communication networks. The network(s) may be formed on one or more local area or wide area networks, such as the Internet. The network may be former by wired or wireless connections using one or a combination of standards, such as TCP/IP, Ethernet 802.X, 3G, HSDPA, LTE etc.

The database servers 130, 140 can each be provisioned and defined by the particular schema of the database adopted. Each database 132, 142 of the system 100 can have a database of the same or similar versions in terms of configuration and/or schema so that they can each be accessed by any one of the first or second client access devices 110a, 110b, so long as suitable access rights exist between the client access device 110a, 110b and the database server 130, 140.

The first client access device 110a is configured to send one or more requests (access queries) which can include one or more conventional access queries supported by both databases 132, 142, and one or more extended access queries which are each based on the additional functionality (database extensions) supported by the first database 132, but not supported by the second database 140. The second client access device 110b is configured such that it can send one or more conventional access requests which are supported by both the first database 132 and second database 142, but cannot send requests for additional functionality (extended access queries) to the first database 132. The first client access device 110a is configured to send additionally The database access device 120 interprets the requests from the various client access devices 110a, 110b and formats the request appropriately so that the extended access query can be sent if needed, i.e. if the request from the first database access device 110a contains such an extended access query it is sent, or reformatted and sent. Requests received at the database access device 120 which contain one or more extended access queries which are not supported by the first database 132 based on a register of extended database functionality are blocked. Extended access queries which are received at the database access device 120 and which are supported by the associate first database 132 can be sent on as received or reformatted in a way which is acceptable for the first database 132, e.g. using an extendable query syntax which is receivable and interpretable by the first database 132 for processing and responding to the extended access query.

The database access device 120 maintains a database configuration register which identifies each database 132 according to its configuration and schema, and significantly whether any additional functionality is provided as a result of the schema or individual server site control configuration contained therein. In the embodiment of Fig. 1, redirection and control of data access to/from or between the client access device 110a, 110b and database servers 130 is performed by the database access device 120. The client access device 110a, 110b sends its data and requests (both conventional access queries, and if supported, extended access queries) for data to the database access device 120, which then determines whether custom requests need to be performed for the individual database server 130 to which the access device 120 is connected. This determination comprises performing a lookup in memory of the database access device 120 as to which functionality, e.g. database schema and/or site control functionality is present for the database server being accessed. Additionally, each client access 110a, 110b can be configured to send a pre-request query as to the functionality of the associated database, such that the database access device 120 checks in its register whether any extended functionality of the database 132 exists, and if so, responds to the client access device 110a with an functionality response message indicative of the extended functionality of the database 132. The client access device 110a can then determine whether to send an extended access query to the database access device.

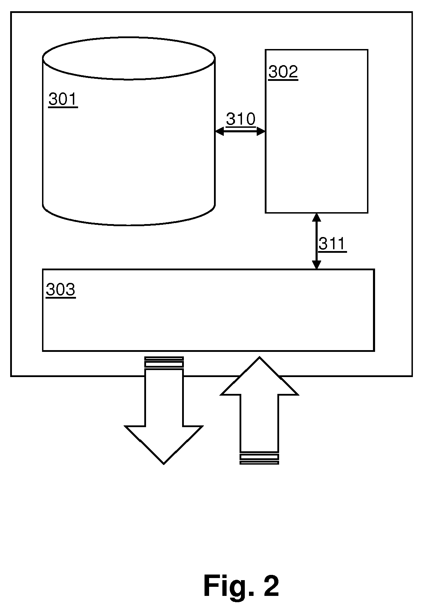

With reference to Fig. 2, each of the client access devices 110a, 110b, database servers 130, 140 and database access device 120, are formed in a similar way based on similar components, with each including memory 301, processing circuitry 302 and input-output interface 303. The memory 301 may be one or more of a combination of read access memory, such as, for example: flash (SDD), DRAM, hard disk (HDD). Such memory 301 may be mirrored for backup purposes, e.g. via RAID. The memory 301 is connected via a data bus 310 to the processing circuitry 302. The memory 301 can store computer executable instructions in the form of a non-transitory computer program which can be obtained by the processing circuitry and executed to perform the functionality of the server or user equipment in accordance with the present disclosure. In the case of the database servers 130, 140, the memory 301 is additionally configured to store data for the databases, including both database content and database schema and extensibility configuration information, such custom site control configuration.

The input-output interface 303 may comprise one or more of: a network interface for communication of the server or device with the at least one communication network 160a, 160b, 160c, data/user interface input means (not shown) for inputting data into the server or client access device directly, e.g. keyboard, pointing device or touch sensitive interface, such as touch display, and optionally display screen (not shown) for outputting data directly from the device.

The processing circuitry 302 is connected for bidirectional communication via internal bus 311 with the input-output interface 303, such that data obtained from the memory 301 can be processed and output externally, e.g. to the at least one communication network 160a, 160b, 160c or connected display screen of the server or client access device. Input can be received into the server or device via the input-output interface, e.g. from the data/user interface input means, can thereby be processed by the server or device and stored in the memory 301.

In an alternative embodiment, the functionality of the database access device 120 can be integrated with its associated server 130. For example, the device may be an executable module based on the same hardware as the server, and being executed alongside the database server 132. Thus, references in this disclosure to "client access device" include an executable module which may be integrated with modules providing the functionality of the database server 130.

The processing circuitry 302 may be formed of one or more processors each of which or together (e.g. in a pipelined parallel architecture) executes the executable instructions to perform the relevant functions of the server or UE device. The executable instructions thereby provide the database server functionality for obtaining from the memory 301, and also storing therein, database content and database schema and extensibility configuration data in the databases 130, 150. The processing circuitry 302 is configured to access and store the content data in the memory according to a defined configuration of the database which defines the database schema and/or the extensibility configuration data.

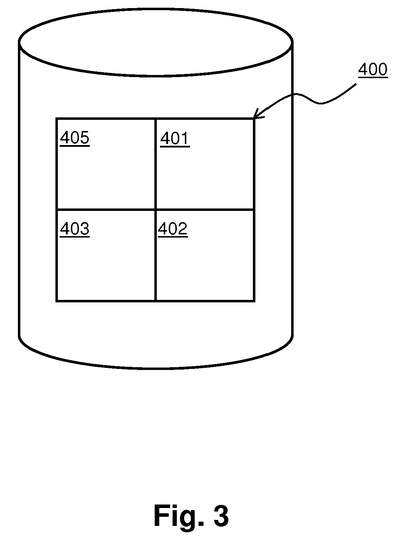

The database schema and data content is described in more detail with reference to Fig. 3. The data 400 stored in each of the databases, namely the databases 132, 142, can be split into two types of data content, namely master data 401, and local (extension) data 402. In addition, each database has a defined database schema 405 which is permitted according to the configuration of the database. The database schema 405 defines the structure of the database 400 and may be custom to each individual database 132, 142, in that it stores data which characterises the way in which the master data 401 and local data 402, are stored in the database 400. In essence, in one embodiment, this means that the schema 405 data defines one or more of the following features for the database 400: database tables, fields, database columns; and/or data types for the fields and/or columns. The custom schema may have common components with other databases, e.g. the schema of database 132 may have common elements with database 142 since the databases are similar. The master data 401 may also be common between the two or more databases 132, 142. The extended capability and functionality of the database 400 may be provided by extended store procedure configuration data 403 in conjunction with the custom schema 405 and local data 402. The extended store procedure 403 contains data which configures the database when provisioned on its server 130 to provide extended database responses in response to extended access queries received from database access query device 120. The extended store procedure 403 contains custom data which can configure the database 400 to process the master data 401 and local data 402 uniquely in a custom way for the database 400.

For example, database 400 may be unique in this respect by being the first database 132, and including:
- a schema 405 which comprises the schema of the second database 142 and additionally unique extensions to that schema;
- local data 402 which is unique to the first database 132 vis-à-vis the second database 142; and
- custom store procedure 403 which is unique to the first database 132 vis-à-vis the second database 142.

The local data 403 which can be present in the databases 132, 142 is data which is typically stored only locally within its server. This does not mean necessarily that the data is unique to its database in the sense that it is not stored in any other database, but it is data which is not shared across the other databases, unlike the master data 401 which is provisioned by the database service itself. In contrast, this local data 403 is data which is directly input or generated by the custom stored procedure where present, for example in database 142

The master data 401 and local data 403 are all stored according to schema 405 which can be one of a plurality of different schemas for the database system 100 as permitted by the database system 100. Each database 132 and 142 can have different schemas and thus different configurations, as explained in further detail below, but there are at least common schema components in schema 405 of both databases 132, 142 according to the database system 100. The upgrading of database schemas may happen locally on the database 132, 142.

The functionality of the present disclosure according to the above embodiments can be summarised as follows. The first database 132 supports both conventional access queries and extended access queries. The database access device 120 receives one or more database access queries from either one of the client access devices 110a, 110b. The one or more access queries may be of the form of one or more of a conventional or extended access query. Based on the form of the received query from the devices 110a, 110b, the database access device 120 provides an extended service response to the client access device 110a, 110b which sent the query. This response is provided based on sending a further query to the first database 132 and receiving a response thereto which is provided in response to the client access device 110a, 110b which sent the query.

It will be appreciated that the invention of the present disclosure has been described above by way of example only, and that modifications may be made within the scope of the general disclosure in accordance with the invention defined by the independent claims.

The following is a non-exhaustive list of embodiments which may be claimed:
1. A method for handling access to a database service hosted by a database server, comprising:
   (i) providing a database access device in communication with the database server, the database server supporting both conventional access queries and extended access queries;
   (ii) receiving one or more database access queries from an external source at the database access device; and
   (iii) based on a received query, the database access device providing an extended service response in response to the external source.
2. The method of embodiment 1, wherein step (iii) comprises processing the received query by the database access device, and determining that the received query comprises an extended access query and sending the extended access query to the database server in a form which is supported by the database server for interpreting the extended access query.
3. The method of embodiment 2, wherein the database service comprises conventional database store procedures and extended store procedures.
4. The method of embodiment 3, wherein step (iii) further comprises the database access device reformatting the extended access query into a form supported by the extended store procedure of the database service and sending the reformatted extended access query to the database server.
5. The method of embodiment 4, wherein step (iii) further comprises the database server receiving the extended access query, processing it according to the extended store procedure and responding with the extended service response.
6. The method of any one of embodiments 2 to 5, further comprising step (ii-a) determining via the database access device whether the database service has the capability to respond to the extended access query.
7. The method of embodiment 6, wherein step (ii-a) comprises sending an extended service capability request to the database server to query the capability of the database server provisioned by the database server.
8. The method of embodiment 7, further comprising step (ii-b) receiving the extended service capability request at the database server and determining whether extended capability of the database service is present.
9. The method of embodiment 8, wherein the step of determining in step (ii-b) comprises, if extended capability of the database is present, responding with an extended database capability indicator to the database access device.
10. The method of embodiment 9, wherein the extended database capability indicator is an indicator of the type of extended capability provisioned by the database server.
11. The method of embodiment 10, further comprising using the extended database capability indicator to identify the form of the extended database access query supported by the database service of the database server for the database access query prior to reformatting.
12. The method of embodiment 11, further comprising storing the extended database capability indicator in an extensibility register accessible to the database access device.
13. The method of embodiment 12, further comprising receiving a further database access query for the database service hosted by the database server and querying the extensibility register to identify the form of the extended database access query supported by the database service of the database server for the further database access query prior to reformatting by the database access device and sending to the database server.
14. A computer readable medium comprising computer executable instructions which, when executed by a processor, cause the processor to perform the steps of the method of any one of the preceding embodiments.
15. A computing device comprising a processor in communication with the computer readable medium of embodiment 14, wherein the processor is configured to execute the executable instructions to perform the method.
16. A database access device comprising the computing device of embodiment 15.
17. A system comprising:
   an external source;
   the database access device of embodiment 16; and
   the database server device in communication with the database access device.

## Claims

1. A method for handling access to a database service hosted by a database server, comprising:
(i) providing a database access device in communication with the database server, the database server supporting both conventional access queries and extended access queries;
(ii) receiving one or more database access queries from an external source at the database access device; and
(iii) based on a received query, the database access device providing an extended service response in response to the external source.

2. The method of claim 1, wherein step (iii) comprises processing the received query by the database access device, and determining that the received query comprises an extended access query and sending the extended access query to the database server in a form which is supported by the database server for interpreting the extended access query.

3. The method of claim 2, wherein the database service comprises conventional database store procedures and extended store procedures.

4. The method of claim 3, wherein step (iii) further comprises the database access device reformatting the extended access query into a form supported by the extended store procedure of the database service and sending the reformatted extended access query to the database server.

5. The method of claim 4, wherein step (iii) further comprises the database server receiving the extended access query, processing it according to the extended store procedure and responding with the extended service response.

6. The method of any one of claims 2 to 5, further comprising step (ii-a) determining via the database access device whether the database service has the capability to respond to the extended access query.

7. The method of claim 6, wherein step (ii-a) comprises sending an extended service capability request to the database server to query the capability of the database server provisioned by the database server.

8. The method of claim 7, further comprising step (ii-b) receiving the extended service capability request at the database server and determining whether extended capability of the database service is present.

9. The method of claim 8, wherein the step of determining in step (ii-b) comprises, if extended capability of the database is present, responding with an extended database capability indicator to the database access device.

10. The method of claim 9, wherein the extended database capability indicator is an indicator of the type of extended capability provisioned by the database server.

11. The method of claim 10, further comprising using the extended database capability indicator to identify the form of the extended database access query supported by the database service of the database server for the database access query prior to reformatting.

12. A computer readable medium comprising computer executable instructions which, when executed by a processor, cause the processor to perform the steps of the method of any one of the preceding claims.

13. A computing device comprising a processor in communication with the computer readable medium of claim 12, wherein the processor is configured to execute the executable instructions to perform the method.

14. A database access device comprising the computing device of claim 13.

15. A system comprising:
an external source;
the database access device of claim 14; and
the database server device in communication with the database access device.
